(19) Europäisches Patentamt
European Patent Office
Office européen des brevets

(11) **EP 3 451 827 B1**

(12) **EUROPÄISCHE PATENTSCHRIFT**

(45) Veröffentlichungstag und Bekanntmachung des Hinweises auf die Patenterteilung:
**15.12.2021  Patentblatt 2021/50**

(21) Anmeldenummer: **17712750.3**

(22) Anmeldetag: **21.03.2017**

(51) Int Cl.:
***A01L 5/00*** *(2006.01)*        ***A01L 1/04*** *(2006.01)*

(86) Internationale Anmeldenummer:
**PCT/EP2017/056632**

(87) Internationale Veröffentlichungsnummer:
**WO 2017/190879 (09.11.2017 Gazette 2017/45)**

(54) **HUFEISEN**

HORSESHOE

FER À CHEVAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2016  DE 102016108363**

(43) Veröffentlichungstag der Anmeldung:
**13.03.2019  Patentblatt 2019/11**

(73) Patentinhaber:
• **Deantec GmbH**
**57399 Kirchhundem (DE)**
• **Oy Diaco AB**
**00210 Helsinki-Helsingfors (FI)**

(72) Erfinder:
• **DENKE, Falk**
**57399 Kirchhundem (DE)**
• **MORELL, Hans**
**00100 Helsinki (FI)**

(74) Vertreter: **Beckmann, Jürgen**
**Dr. Jürgen Beckmann**
**Patentanwalt**
**An der Baumschule 23**
**57462 Olpe (DE)**

(56) Entgegenhaltungen:
**EP-A1- 2 179 646        WO-A1-2011/099960**
**CA-A1- 2 097 876        DE-B4-102008 015 139**
**FR-A1- 2 982 734        US-A1- 2010 276 163**

**Beschreibung**

Erfindung betrifft ein Hufeisen zum Beschlagen von Huftieren, insbesondere von Pferden.

Zum Schutz der Hufe von Pferden ist es seit langem bekannt, diese mit einem Hufeisen zu versehen. Die herkömmlichen Hufeisen bestehen dabei aus einem U-förmig gebogenen Streifen aus Eisen oder Stahl mit einer Dicke von mehreren Millimetern. Auf diese Weise wird ein starrer, verschleißfester Schutz für das weiche Hornmaterial des Hufes gewährleistet.

Beispielsweise offenbart die FR 2982734 A1 ein starres Hufeisen, das aus Metall oder Kunststoff bestehen kann.

Die WO 2011/099960 A1 offenbart ein U förmiges Hufeisen, dessen Schenkel vermöge eines über die Unterseite vorstehenden Vorsprunges auseinandergebogen werden.

Die EP 2 179 646 A1 offenbart ein Hufeisen aus zwei oder mehr gelenkig miteinander verbundenen Teilen.

Die DE 34 23 838 A1 offenbart ein Hufeisen, bei dem hufseitig eine Metallschicht und bodenseitig ein elastischer Kunststoff aus Reifengummi vorhanden ist. Die Metallschicht ist radial bis vorzugsweise zur Mitte V-förmig geschlitzt, um beim "Schmieden" eine leichte Anpassung des Hufeisens an die jeweilige Hufform zu ermöglichen.

Die DE 102008015 139 A1 zeigt ein Hufeisen aus einem starren Hufschutz, in den hufseitig eine Einlage aus einem nachgiebigen Material eingearbeitet ist.

Die DE 1 903966 A offenbart ein Hufeisen aus zwei Kunststoffen, die zwischen sich eine Gummischicht haben können, wobei die hufseitige Platte aus einem harten Kunststoff besteht.

Die DE 24 27 119 A1 betrifft ein hinsichtlich der Starrheit herkömmliches Hufeisen, das aus "glasfaserverstärkten Duroplasten" bestehen kann. Die bodenseitige Fläche wird durch Einlagerung von Kornmaterial oder dergleichen aufgeraut.

Vor diesem Hintergrund war es Aufgabe der vorliegenden Erfindung, einen Schutz für die Hufe von Pferden oder anderen Huftieren bereitzustellen, welcher verbesserte Trageigenschaften aufweist.

Diese Aufgabe wird durch ein Hufeisen sowie durch ein Verfahren gemäß den unabhängigen Ansprüchen gelöst. Vorteilhafte Ausgestaltungen sind in den Unteransprüchen enthalten.

Das erfindungsgemäße Hufeisen wird zum Schutz der Hufe von Huftieren wie insbesondere Pferde verwendet. Es ist derart elastisch, dass es eine reversible Verformung erlaubt. Diese Verformung soll dabei unter typischen Nutzungsbedingungen möglich sein, also z.B. beim Stand oder beim Laufen des Trägertieres auf einem Untergrund.

Die beschriebene Verformbarkeit des Hufeisens äußert sich beispielsweise darin, dass das Hufeisen bei Ausübung einer Kraft von der Größe des Gewichts des Trägertieres ($\geq$ 50 kg) eine makroskopisch sichtbare Verformung erfährt. Die Verformung kann typischerweise ein Ausmaß von 1 bis 12 Millimetern, vorzugsweise von 1 bis 8 Millimetern, besonders bevorzugt von 1 bis 5 Millimetern bzw. ca. 20-200% der Dicke des Hufeisens aufweisen. Das Hufeisen sollte die natürliche Verformung eines unbeschlagenen Hufes möglichst nicht bzw. nur unwesentlich beeinträchtigen.

Vorteilhafterweise ist die Verformbarkeit des Hufeisens so, dass der Huf beim Laufen im Wesentlichen (d.h. zu mehr als ca. 50%, vorzugsweise mehr als ca. 80% der Amplitude) die Verformungen erfährt, denen er ohne Hufeisen unterliegen würde. Bei einem Hufeisen für ein Pferd entspricht diese Verformbarkeit einem Aufbiegen des Hufeisens von einem Millimeter oder mehr bei jedem Schritt. Vorzugsweise kann sich das Hufeisen (bzw. der Huf), gemessen an den offenen Enden des Hufeisens, mehrere Millimeter (typischerweise 1 bis 12 mm, vorzugsweise 1 bis 8 mm) reversibel aufbiegen.

Gemäß der Erfindung kann sich ein Hufeisen in U-Form reversibel um mindestens ca. 2 mm, beispielsweise mindestens ca. 3 mm, beispielsweise mindestens ca. 5 mm, beispielsweise mindestens ca. 8 mm, oder beispielsweise mindestens ca. 16 mm weiter aufbiegen, wenn die Enden der U-Form jeweils mit entgegengesetzt gerichteten Kräften von maximal 200 N auseinander gezogen werden. Mit anderen Worten liegt die Federrate des Hufeisens in Bezug auf das Aufbiegen vorzugsweise in einem Bereich zwischen ca. 100 N/mm und ca. 12 N/mm.

Beispielsweise beim Kurvenlauf kann die Verformung des Hufes bzw. Hufeisens auch unsymmetrisch sein.

Das erfindungsgemäße Hufeisen kann geometrisch die Form und die Abmessungen herkömmlicher Hufeisen aufweisen, also insbesondere ein Streifen mit einer Breite von ca. 1 cm bis ca. 3 cm und/oder einer Dicke von ca. 5 mm bis ca. 20 mm sein, der entsprechend der Größe des Hufes des Trägertieres U-förmig gebogen ist.

Gegenüber herkömmlichen Hufeisen aus Eisen oder Stahl mit gleichen Dimensionen hat das erfindungsgemäße Hufeisen eine höhere Elastizität, welche den Vorteil hat, dass während der Benutzung Verformungen des Hufeisens möglich sind, die sich auf das angrenzende Hornmaterial des Hufes übertragen. Die resultierende Verformung des Hornmaterials führt wiederum zu einem Pumpeffekt für das den Huf versorgende Blut, welcher die Wirkung des Herzens positiv unterstützt.

Die elastische Verformung des Hufeisens kann sich auf eine oder mehrere Verformungsarten beziehen, beispielsweise auf eine Verwindung (Torsion) des (als Streifen betrachteten) Hufeisens um seine Längsachse. Insbesondere kann die Verformung sich in einer Biegung des Hufeisens (typischerweise mit der Biegestelle im Bogen einer U-Form) ausdrücken. Eine solche Art der Verformung lässt sich technisch durch das Dehnungsmodul E (Youngscher Modul) beschreiben. Die zugrunde gelegte Definition des Dehnungsmoduls ergibt sich dabei für einen Stab der Länge L aus der Gleichung

$$F/A = E \cdot \Delta L/L,$$

wobei A die Querschnittfläche des Stabes ist, F die Kraft ist, mit welcher an dem Endes des Stabes (senkrecht zur Querschnittfläche A) gezogen wird, und ΔL die durch den Zug bewirkte Längenänderung des Stabes ist. Für das erfindungsgemäße Hufeisen hat das Dehnungsmodul (zumindest in einem Abschnitt des Hufeisens) vorzugsweise einen Wert von weniger als ca. 30000 MPa. Die Zug-Druck-Wechselfestigkeit des Hufeisens ist vorzugsweise ähnlich oder höher als die von einem Baustahl (E-Modul ca. 210000 MPa), d.h. in einem Bereich von ca. 60% bis ca. 200% der Zug-Druck-Wechselfestigkeit des Baustahls.

Zusätzlich oder alternativ kann das Hufeisen eine hohe Bruchdehnung aufweisen.

Die Bruchdehnung gibt die bleibende Verlängerung einer Probe (bezogen auf die Anfangsmesslänge) nach ihrem Bruch an.

Damit das Hufeisen trotz seiner Elastizität eine ausreichende Widerstandsfähigkeit gegenüber den Beanspruchungen während seiner Benutzung aufweist, enthält das Hufeisen erfindungsgemäß einen Verschleißschutz.

Der vorgenannte Verschleißschutz ist auf einer Trägerschicht angeordnet, welche sich optional durchgehend über die gesamte Fläche des

Hufeisens erstreckt und welche typischerweise die gewünschten elastischen Eigenschaften bereitstellt. Die Befestigung des Verschleißschutzes an der Trägerschicht kann beispielsweise durch Kleben erfolgen.

Zur Erreichung der elastischen Eigenschaften des Hufeisens kann dieses optional einen Faserverbundwerkstoff enthalten oder hieraus bestehen. Insbesondere kann die vorgenannte Trägerschicht einen derartigen Faserverbundwerkstoff enthalten. Bei dem Faserverbundwerkstoff kann es sich vorzugsweise um einen Glasfaserverstärkten Kunststoff (GFK) oder einen Kohlenstofffaserverstärkten Kunststoff (CFK) handeln. Vorzugsweise hat der Faserverbundwerkstoff eine Zug-Druck-Wechselfestigkeit ähnlich der von einem Baustahl.

Der oben erwähnte Verschleißschutz kann auf verschiedene Arten ausgebildet werden und sich nur auf bestimmte Zonen des Hufeisens beschränken. Vorzugsweise ist der Verschleißschutz jedoch als eine Schicht ausgebildet, die sich über die komplette Fläche des Hufeisens erstreckt. Insbesondere kann es sich hierbei um eine Außenschicht handeln, welche bei der Benutzung des Hufeisens mit dem Untergrund in Kontakt tritt.

Der Verschleißschutz kann aus einem verschleißfesten Material wie beispielsweise einem Metall (Eisen, Stahl, hochfester Stahl, Titan etc.) und/oder Keramik bestehen oder ein solches Material enthalten.

Um die Rutschfestigkeit des Verschleißschutzes auf dem Untergrund zu erhöhen, können optional Stollen, Spikes oder ähnliches in die Verschleißschicht eingebracht werden. Dies geschieht vorzugsweise durch Einschrauben von Schraubstollen oder einschraubbaren Spikes oder durch Einschlagen von konischen Stiften, vorzugsweise aus Stahl oder Hartmetall, in dafür vorher in die Verschleißschicht eingebrachten Löcher.

Das Hufeisen kann entlang seiner Längserstreckung homogen ausgebildet sein, d. h. an jedem Punkt des U-Bogens in etwa gleiche Verformbarkeit (Elastizität) und/oder gleiche geometrische Abmessungen haben. Alternativ kann das Hufeisen auch variierende physikalische Eigenschaften haben. Insbesondere kann es mindestens eine Gelenkzone erhöhter Beweglichkeit aufweisen, welche für die gewünschte Verformbarkeit verantwortlich ist. Die Gelenkzone kann sich vorzugsweise quer zur Längserstreckung des Hufeisens erstrecken, sodass sie eine Knickbewegung des Hufeisens ermöglicht. Die Gelenkzone kann beispielsweise durch eine Kerbe und/oder eine Materialgrenze innerhalb des Hufeisens realisiert sein. Sie kann insbesondere in dem Verschleißschutz ausgebildet sein, grundsätzliche jedoch in jeder beliebigen Materialschicht des Hufeisens.

Bei einer bevorzugten Ausführungsform enthält der Verschleißschutz zwei oder mehr Trennschlitze. Ein Trennschlitz kann dabei optional durch die gesamte Dicke des Verschleißschutzes verlaufen (z-Richtung in den Figuren). Vorzugsweise verläuft ein Trennschlitz nicht durch die komplette Breite des Verschleißschutzes, sodass eine Materialbrücke bestehen bleibt, welche die beiderseits des Trennschlitzes liegenden Teile des Verschleißschutzes verbindet. Insbesondere können Trennschlitze bei einem U-förmig gebogenen Verschleißschutz-Streifen radialförmig von einem Mittelpunkt aus zum äußeren Rand des Verschleißschutzes verlaufen.

Zusätzlich oder alternativ kann der Verschleißschutz aus zwei oder mehr separaten Teilstücken bestehen. Durch die Materialgrenzen zwischen den Teilstücken werden dann Gelenkzonen der oben beschriebenen Art erzeugt, sodass ein ansonsten im Wesentlichen starrer Verschleißschutz nicht die gewünschte Verformbarkeit des Hufeisens als Ganzes verhindert. Der Verschleißschutz kann beispielsweise mosaikartig aus typischerweise zwischen zwei und 20 Teilstücken zusammengesetzt sein.

Gemäß der Erfindung ist eine elastische Zwischenschicht zwischen dem Verschleißschutz und der Trägerschicht angeordnet. Durch eine solche Zwischenschicht kann gewährleistet werden, dass die Festigkeit des Verschleißschutzes nicht zu einer zu starken Einschränkung der Verformbarkeit der Trägerschicht führt. Die Zwischenschicht kann beispielsweise aus Gummi oder einem Material mit ähnlichen elastischen Eigenschaften bestehen.

Die Erfindung betrifft weiterhin ein Verfahren zur Herstellung eines Hufeisens gemäß der zuletzt beschriebenen Ausführungsform, d.h. mit einer Zwischenschicht aus Gummi zwischen der Trägerschicht und dem Verschleißschutz. Gemäß diesem Verfahren werden der Verschleißschutz und die Trägerschicht zusammen mit der Gummischicht vulkanisiert. Auf diese Weise entsteht eine besonders feste Verbindung. Das Ausschneiden des Hufeisens in seiner endgültigen Form kann beispielsweise durch einen Wasserstrahl erfolgen.

Bei einer Weiterbildung des Verfahrens kann die Trägerschicht aus einem Faserverbundwerkstoff bestehen. Vorzugsweise findet dann die Vulkanisierung bei Werten für die Temperatur und/oder den Druck statt, bei denen auch der Faserverbundwerkstoff zusammengebacken wird (d.h. die Fasern untereinander verbunden werden). Typischerweise liegt die Temperatur der Vulkanisierung bei ca. 110° bis 180°, vorzugsweise bei ca. 140°.

Im Folgenden wird die Erfindung mit Hilfe der Figuren beispielhaft näher erläutert. Darin zeigt:

Fig. 1    eine Ansicht auf die Oberseite (Hufseite) einer Ausführungsform eines erfindungsgemäßen Hufeisens;

Fig. 2    eine Ansicht auf die Unterseite (Bodenseite) des Hufeisens von Figur 1.

Der Huf eines Pferdes ist elastisch und dehnt sich beim Auftreten und Laufen. Durch diese Bewegung tritt durch das im Huf liegende Gewebe ein Pumpeffekt ein, welcher das Herz bei der Durchblutung des Körpers und der Beine unterstützt. Hufeisen werden in der Regel aus Stahl geschmiedet. Die hohe Steifigkeit der Stahl-Hufeisen verhindert die natürliche Bewegung der Hufe. Dadurch fehlt bei beschlagenen Pferden der Pumpeffekt. In der Folge können dadurch Schäden am Huf aufkommen. Bei Sportpferden führt dies zu verminderter Leistungsfähigkeit. Auf befestigten Böden kann man allerdings auch nicht auf Hufeisen verzichten.

Zur Verminderung der beschriebenen Probleme wird erfindungsgemäß ein Hufeisen vorgeschlagen, welches so elastisch ist, dass es die natürliche Bewegung der Hufe beim Laufen und Auftreten mitmacht. Im dargestellten Ausführungsbeispiel eines solchen Hufeisens 10 ist dieses aus mehreren Schichten aufgebaut:

-    Einer Trägerschicht 11, welche die gewünschten elastischen Eigenschaften aufweist und die unmittelbar mit dem Huf in Kontakt kommt. Die Trägerschicht kann insbesondere aus einem Faserverbundwerkstoff bestehen, insbesondere aus einem Glasfaserverstärkten Kunststoff (GFK). Der GFK kann beispielsweise eine Matrix von modifiziertem Epoxidharz mit nicht verwebten E-Glasfasern sein, die z.B. unidirektional längsorientiert oder 50% längs- und 50% querorientiert liegen (erhältlich beispielsweise als "Blattfedern Typ 1002" von P.J. Krause Durotec GmbH, Arnsberg). Die Dicke der Trägerschicht 11 beträgt typischerweise zwischen ca. 2 mm und 10 mm, vorzugsweise ca. 3 mm oder 3.5 mm (größere Hufeisen) bei GFK.

-    Einer Zwischenschicht 12, die beispielsweise aus Gummi bestehen kann. Die Dicke der Zwischenschicht 12 beträgt typischerweise zwischen ca. 0.1 mm und 4 mm, vorzugsweise ca. 0.5 mm. Die Zwischenschicht 12 kann Schubspannungen aufnehmen, welche sich sonst in angrenzenden Klebeschichten bilden.

-    Einem Verschleißschutz 13, welcher die zum Boden zeigende Außenoberfläche des Hufeisens bildet und der bei der Benutzung mit dem Boden in Kontakt kommt. Die Dicke des Verschleißschutzes 13 beträgt typischerweise zwischen ca. 0.5 mm und 4 mm bei Metallen bzw. zwischen ca. 2 mm und 8 mm bei Keramik.

Durch eine entsprechende Festigkeit gewährleistet der Verschleißschutz 13 einen Schutz des Hufeisens vor Abnutzung. Er kann beispielsweise aus Stahl, hochfestem Stahl, Eisen, Titan, Keramik oder anderen verschleißfesten Materialien bestehen.

Der Verschleißschutz wird in geeigneter Weise an der Zwischenschicht 12 befestigt, beispielsweise durch Kleben. Eine Zwischenschicht 12 hat den Vorteil, dass der Verschleißschutz 13 nicht die Elastizität der Trägerschicht negativ beeinflusst.

Wenn eine Zwischenschicht 12 aus Gummi vorhanden ist, erfolgt deren Verbindung mit der Trägerschicht 11 und dem Verschleißschutz 13 vorzugsweise durch Vulkanisieren. Insbesondere können eine Trägerschicht 11 aus Faserverbundwerkstoff und ein Verschleißschutz 13 (z.B. aus Stahlplättchen) mit einer Gummischicht 12 zusammen vulkanisiert werden. Die Vulkanisation findet vorzugsweise bei ca. 140°C statt. Bei dieser Temperatur wird gleichzeitig im selben Arbeitsgang auch der Faserverbundwerkstoff unter Druck zusammengebacken.

Des Weiteren kann der Verschleißschutz vorzugsweise als Mosaik oder als geschlitzte Platte ausgebildet sein. Im dargestellten Beispielen ist der Verschleißschutz 13 als ein (U-förmig gebogener) Streifen ausgebildet, in welchen radial von innen ausgehend in ungefähr äquidistanten Abständen Trennschlitze 14 eingebracht sind, durch welche Gelenkzonen ausgebildet werden. Ein Trennschlitz 14 geht dabei vorzugsweise nicht durch die gesamte Breite des Verschleißschutzes 13, sodass dieser über einen außen liegenden Randstreifen einstückig verbunden bleibt. Dennoch wird die gewünschte Beweglichkeit des Verschleißschutzes und damit die Verformbarkeit der Trägerschicht gewährleistet. Das Hufeisen 10 kann weiterhin in bekannter Weise Löcher 15 aufweisen, durch welche es am Huf eines Pferdes festgenagelt werden kann.

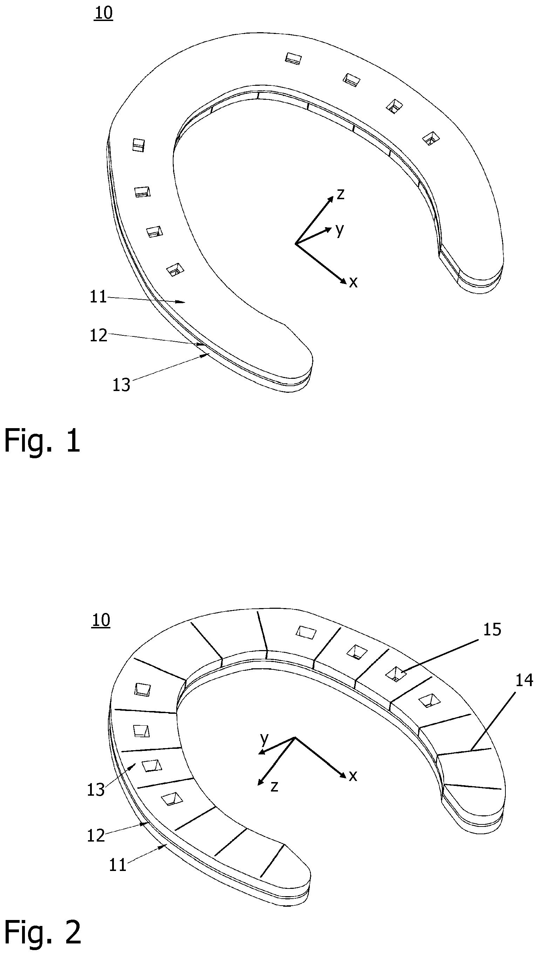

Die Verformbarkeit des Hufeisens 10 kann dadurch charakterisiert werden, dass sich der Abstand zwischen seinen Enden durch Aufbiegen reversibel um mindestens ca. 2 mm, wenn die Enden der U-Form jeweils mit entgegengesetzt gerichteten Kräften (in positiver und negativer y-Richtung der Koordinaten von Figur 1) von maximal 200 N auseinander gezogen werden. Das entspricht einer Federrate von 100 N/mm. Vorzugsweise ist die Federrate noch geringer, da es nicht in erster Linie darum geht, den Huf zu stabilisieren, sondern den Verschleiß einzuschränken.

Besonders bevorzugte Werte der Federrate eines U-förmigen Hufeisens liegen daher bei ca. 90 N/mm, ca. 80 N/mm, ca. 70 N/mm, ca. 60 N/mm, ca. 50 N/mm, ca. 40 N/mm, ca. 30 N/mm, ca. 20 N/mm, ca. 10 N/mm oder noch niedriger als 10 N/mm.

**Patentansprüche**

1. Hufeisen (10), insbesondere für Pferde, welches derart elastisch ist, dass es eine Verformung erlaubt, wobei

   - das Hufeisen eine U-Form hat, die sich reversibel um mindestens 2 mm aufbiegen lässt, wenn die Enden der U-Form jeweils mit entgegengesetzt gerichteten Kräften von maximal 200 N auseinander gezogen werden;
   - das Hufeisen einen Verschleißschutz (13) enthält;
   - der Verschleißschutz (13) auf einer Trägerschicht (11) angeordnet ist;
   - zwischen Verschleißschutz (13) und Trägerschicht (11) eine elastische Zwischenschicht (12) angeordnet ist.

2. Hufeisen (10) nach Anspruch 1,
   **dadurch gekennzeichnet, dass** die Trägerschicht (11) einen Faserverbundwerkstoff enthält, insbesondere einen Glasfaserverstärkten Kunststoff oder Kohlenstofffaserverstärkten Kunststoff.

3. Hufeisen (10) nach mindestens einem der Ansprüche 1 bis 2,
   **dadurch gekennzeichnet, dass** der Verschleißschutz (13) als Schicht ausgebildet ist, insbesondere als Außenschicht.

4. Hufeisen (10) nach mindestens einem der Ansprüche 1 bis 3,
   **dadurch gekennzeichnet, dass** der Verschleißschutz (13) Metall, insbesondere Stahl, hochfesten Stahl, Titan oder Eisen, und/oder Keramik enthält.

5. Hufeisen (10) nach mindestens einem der vorhergehenden Ansprüche,
   **dadurch gekennzeichnet, dass** es mindestens eine Gelenkzone (14) erhöhter Beweglichkeit aufweist.

6. Hufeisen (10) nach mindestens einem der Ansprüche 1 bis 5,
   **dadurch gekennzeichnet, dass** der Verschleißschutz (13) zwei oder mehr Trennschlitze (14) aufweist.

7. Hufeisen (10) nach mindestens einem der Ansprüche 1 bis 6,
   **dadurch gekennzeichnet, dass** die Zwischenschicht (12) eine Gummischicht ist.

8. Verfahren zur Herstellung eines Hufeisens (10) nach Anspruch 7,
   **dadurch gekennzeichnet, dass** der Verschleißschutz (13) und die Trägerschicht (11) zusammen mit der Gummischicht vulkanisiert werden.

**Claims**

1. Horseshoe (10), in particular for horses, which is elastic so as to permit deformation, wherein

   - the horseshoe has a U-shape which can be reversibly bent open by at least 2 mm when the ends of the U-shape are each pulled apart with oppositely directed forces of at most 200 N;
   - the horseshoe includes a wear protection (13);
   - the wear protection (13) is arranged on a carrier layer (11);
   - an elastic intermediate layer (12) is arranged between the wear protection (13) and the carrier layer (11).

2. Horseshoe (10) according to claim 1,
   **characterized in that** the carrier layer (11) contains a fibre composite material, in particular a glass-fibre-reinforced plastic or carbon-fibre-reinforced plastic.

3. Horseshoe (10) according to at least one of the claims 1 to 2,
   **characterized in that** the wear protection (13) is formed as a layer, in particular as an outer layer.

4. Horseshoe (10) according to at least one of the claims 1 to 3,
   **characterized in that** the wear protection (13) contains metal, in particular steel, high-strength steel, titanium or iron, and/or ceramic.

5. Horseshoe (10) according to at least one of the preceding claims,
   **characterized in that** it has at least one joint zone (14) of increased mobility.

6. Horseshoe (10) according to at least one of the claims 1 to 5,
   **characterized in that** the wear protection (13) comprises two or more separation slits (14).

7. Horseshoe (10) according to at least one of the claims 1 to 6, **characterized in that** the intermediate layer (12) is a rubber layer.

8. Procedure of producing a horseshoe (10) according to claim 7, **characterized in that** the wear protection (13) and the carrier layer (11) are vulcanized together with the rubber layer.

## Revendications

1. Fer à cheval (10), en particulier pour chevaux, qui est élastique de manière à permettre une déformation, dans lequel

   - le fer à cheval a une forme en U qui peut être ouvert de manière réversible d'au moins 2 mm lorsque les extrémités de la forme en U sont tirées l'une vers l'autre avec des forces opposées d'au plus 200N;
   - le fer à cheval comprend une protection contre l'usure (13) ;
   - la protection contre l'usure (13) est disposée sur une couche de support (11);
   - une couche intermédiaire élastique (12) est disposée entre la protection contre l'usure (13) et la couche de support (11).

2. Fer à cheval (10) selon la revendication 1, **caractérisé en ce que** la couche de support (11) contient un matériau composite de fibres, en particulier un plastique renforcé par des fibres de verre ou un plastique renforcé par des fibres de carbone.

3. Fer à cheval (10) selon au moins l'une des revendications 1 à 2, **caractérisé en ce que** la protection contre l'usure (13) est formée comme une couche, en particulier comme une couche extérieure.

4. Fer à cheval (10) selon au moins l'une des revendications 1 à 3, **caractérisé en ce que** la protection contre l'usure (13) contient du métal, en particulier de l'acier, de l'acier à haute résistance, du titane ou du fer, et/ou de la céramique.

5. Fer à cheval (10) selon au moins l'une quelconque des revendications précédentes, **caractérisé en ce qu'**il comprend au moins une zone d'articulation (14) à mobilité accrue.

6. Fer à cheval (10) selon au moins l'une des revendications 1 à 5, **caractérisé en ce que** la protection contre l'usure (13) comprend deux ou plusieurs fentes de séparation (14).

7. Fer à cheval (10) selon au moins l'une des revendications 1 à 6, **caractérisé en ce que** la couche intermédiaire (12) est une couche de caoutchouc.

8. Procédé de fabrication d'un fer à cheval (10) selon la revendication 7, **caractérisé en ce que** la protection contre l'usure (13) et la couche de support (11) sont vulcanisées ensemble avec la couche de caoutchouc.

10

Fig. 1

10

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- FR 2982734 A1
- WO 2011099960 A1
- EP 2179646 A1
- DE 3423838 A1
- DE 102008015139 A1
- DE 1903966 A
- DE 2427119 A1